(19)

**Europäisches Patentamt**

**European Patent Office**

**Office européen des brevets**

(11) **EP 4 783 077 A1**

(12) **EUROPEAN PATENT APPLICATION**

(43) Date of publication:
   **29.07.2026 Bulletin 2026/31**

(21) Application number: **26153384.8**

(22) Date of filing: **22.01.2026**

(51) International Patent Classification (IPC):
   ***G06N 20/00*** *(2019.01)*      ***G06T 7/00*** *(2017.01)*

(52) Cooperative Patent Classification (CPC):
   **G06N 20/00; G06T 7/0004;** G06T 2207/30148

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH LA MA MD TN**

(30) Priority: **23.01.2025  KR 20250010261
           11.02.2025  KR 20250017598**

(71) Applicant: **Samsung Electronics Co., Ltd
   Suwon-si, Gyeonggi-do 16677 (KR)**

(72) Inventors:
   • **LIM, Jongin
     16678 Suwon-si (KR)**
   • **KANG, Minsoo
     16678 Suwon-si (KR)**
   • **KO, Minsu
     16678 Suwon-si (KR)**
   • **NAM, Junhyun
     16678 Suwon-si (KR)**
   • **PARK, Sung-Un
     16678 Suwon-si (KR)**
   • **SUH, Sungjoo
     16678 Suwon-si (KR)**

(74) Representative: **Arnold & Siedsma
   Bezuidenhoutseweg 57
   2594 AC The Hague (NL)**

(54) **METHOD AND DEVICE WITH DATA-BALANCED REGRESSION MODEL GENERATION**

(57)    A data analysis method based on a regression model, performed by a computing device including one or more processors and a memory, includes preparing/generating, by the processor, a regression model that includes an encoder and a predictor and that is trained using a proxy including data point having a predetermined distribution, receiving, by the one or more processors, input data, and performing, by the one or more processors, an inference corresponding to a task to be analyzed on the input data through the regression model, the inference performed by the regression model based on the input data.

FIG. 3

**Description**

BACKGROUND

1. Field

The present disclosure relates to a method and device with data-balanced regression model generation.

2. Description of Related Art

Data acquired from a semiconductor manufacturing process may have a data imbalance problem; the majority of data collected during manufacturing is for normal (spec-in) produce and very little of the data is for defect (spec-out) product. This imbalance may cause learning of a regression model to be biased toward the greater weight of spec-in data, resulting in poor defect detection performance when applied to manage actual manufacturing processes. That is, although a learned model has excellent prediction performance for normal data, the model may produce less accurate predictions in relatively important defect data areas, which may reduce the over reliability of a defect monitoring in practice. Data imbalance problems have been widely studied in the field of machine learning, but most research has focused on dealing with imbalanced classification problems. No research has been conducted to solve the imbalanced regression problem.
As observed by only the inventors, it would be beneficial to employ a regression learning technique that considers the characteristics of semiconductor manufacturing processes, and it would be beneficial to employ a model capable of maintaining high prediction performance even with imbalanced data, which would improve defect detection.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
Some embodiments described herein may provide a data analysis method, a learning method, and a data analysis device capable of effectively solving the imbalanced regression problem by introducing a proxy, which is a small-scale data capable of representing the distribution of the entire feature in an imbalanced dataset.
In one general aspect, a data analysis method based on a regression model, performed by a computing device including one or more processors and a memory, includes preparing/generating, by the processor, a regression model that includes an encoder and a predictor and that is trained using a proxy including data point having a predetermined distribution, receiving, by the one or more processors, input data, and performing, by the one or more processors, an inference corresponding to a task to be analyzed on the input data through the regression model, the inference performed by the regression model based on the input data.
In some embodiments, the input data may include image data of a wafer obtained during a semiconductor manufacturing process, and the performing of the task may include predicting, by the one or more processors, a defect probability of the wafer from the input data based on the regression model, and automatically classifying, by the one or more processors, the wafer based on the predicted defect probability.
In some embodiments, the proxy may be defined according to the following Equation 1:

$$\text{Equation 1}$$
$$\mathcal{P} = \{(z_i^p, y_i^p)\}_{i=1}^{C}$$

where, $\mathcal{P}$ is the set of proxies, $z_i^p$ is the proxy, C is the number of proxies, and $y_i^p$ is a target of the proxy.
In some embodiments, the method may further include training, by the one or more processors, the regression model, and wherein the training of the regression model may include randomly initializing, by the one or more processors, $\{z_i^p\}_{i=1}^{C}\}$ corresponding to $\{y_i^p\}_{i=1}^{C}$ after determining $\{y_i^p\}_{i=1}^{C}$, and training, by the one or more processors, $\{z_i^p\}_{i=1}^{C}$ together with a model parameter.
In some embodiments, the training of the regression model may include training, by the one or more processors, the regression model based on a total loss determined based on a predetermined regression loss, a proxy loss, and an alignment loss according to the task.

In some embodiments, the training of the regression model may further include determining, by the processor, the proxy loss according to the following Equation 2:

Equation 2

$$\mathcal{L}_{proxy} = \sum_{i \neq j} \{ p_{ij} \log \frac{p_{ij}}{q_{ij}} - w_{ij}(1 - cos\theta_{z_i^p, z_j^p})^2 \}$$

where, $\mathcal{L}_{proxy}$ is the proxy loss, $p_{ij}$ is a probability distribution representing the similarity between the targets of the proxies, $q_{ij}$ is a probability distribution representing the similarity between the proxies, $w_{ij} = \alpha \times d_t(y_i^p, y_j^p)$, $\alpha > 0$, and $d_t(y_i^p, y_j^p)$ is the distance between $y_i^p$ and $y_j^p$.

In some embodiments, the training of the regression model may further include determining, by the processor, the alignment loss according to the following Equation 3:

Equation 3

$$\mathcal{L}_{align} = -\sum_{j=1}^{C} T_j \log A_j$$

where, $\mathcal{L}_{align}$ is the alignment loss, $T_j$ is a target association vector based on the association between the target and a proxy target, and $A_j$ is a feature association vector based on the association between a feature and the proxy.

In some embodiments, the training of the regression model may further include determining, by the processor, the alignment loss according to the following Equation 4:

Equation 4

$$\mathcal{L}_{align-PAS} = -\sum_{j=1}^{C} \frac{1}{C \cdot \widehat{S_j}} T_j \log A_j$$

where, $\mathcal{L}_{align-PAS}$ is the alignment loss, $\widehat{S_j}$ is the proportion of sample associated with the j-th proxy in the batch, $T_j$ is the target association vector based on the association between the target and the proxy target, and $A_j$ is the feature association vector based on the association between the feature and the proxy.

In some embodiments, the training of the regression model may further include determining, by the processor, the total loss according to the following Equation 5:

Equation 5

$$\mathcal{L}_{PRIME} = \mathcal{L}_{reg} + \lambda_p \mathcal{L}_{proxy} + \lambda_a \mathcal{L}_{align}$$

wherein, $\mathcal{L}_{PRIME}$ is the total loss, $\mathcal{L}_{reg}$ is the regression loss, $\mathcal{L}_{proxy}$ is the proxy loss, $\mathcal{L}_{align}$ is the alignment loss, and each of $\lambda_p > 0$ and $\lambda_a > 0$ is a trade-off parameter for the proxy loss and the alignment loss.

In another general aspect, a learning method of a regression model, performed by a computing device including one or more processors and a memory, includes preparing/generating, by the one or more processors, the regression model, the regression model including an encoder and a predictor, generating, by the one or more processors, a proxy including data points having a predetermined distribution and determining a proxy loss based on the proxy, determining, by the one or more processors, an alignment loss for aligning a feature of input data with the proxy, determining, by the one or more processors, a total loss based on at least two of the predetermined regression loss, the proxy loss, and the alignment loss, wherein the total loss is determined according to the task to be analyzed through the regression model, and training, by the processor, the regression model to minimize the total loss.

In some embodiments, the proxy may be defined according to the following Equation 1:

Equation 1

$$\mathcal{P} = \{(z_i^p, y_i^p)\}_{i=1}^{C}$$

wherein, P is the set of proxies, $z_i^p$ is the proxy, C is the number of proxies, and $y_i^p$ is a target of the proxy.

In some embodiments, the training of the regression model may include randomly initializing, by the one or more processors, $\{z_i^p\}_{i=1}^{C}$ corresponding to $\{y_i^p\}_{i=1}^{C}$ after determining $\{y_i^p\}_{i=1}^{C}$, and training, by the processor, $\{z_i^p\}_{i=1}^{C}$ together with a model parameter.

In some embodiments, the initializing may include determining, by the one or more processors, $\{y_i^p\}_{i=1}^{C}$ as C+1 quantiles of a target range determined by a minimum value and a maximum value of a target in a training dataset.

In some embodiments, the initializing may include determining, by the one or more processors, $\{y_i^p\}_{i=1}^{C}$ as a cluster center to which K-means clustering is applied.

In some embodiments, the determining of the proxy loss may include determining, by the one or more processors, the proxy loss according to the following Equation 2:

Equation 2

$$\mathcal{L}_{proxy} = \sum_{i \neq j}\{p_{ij}\log\frac{p_{ij}}{q_{ij}} - w_{ij}(1 - cos\theta_{z_i^p, z_j^p})^2\}$$

where, $\mathcal{L}_{proxy}$ is the proxy loss, $p_{ij}$ is a probability distribution representing the similarity between the targets of the proxies, $q_{ij}$ is a probability distribution representing the similarity between the proxies, $w_{ij} = \alpha \times d_t\left(y_i^p, y_j^p\right)$, $\alpha > 0$, and $d_t\left(y_i^p, y_j^p\right)$ is the distance between $y_i^p$ and $y_j^p$.

In some embodiments, the determining of the alignment loss may include determining, by the processor, the alignment loss according to the following Equation 3:

Equation 3

$$\mathcal{L}_{align} = -\sum_{j=1}^{C} T_j \log A_j$$

where, $\mathcal{L}_{align}$ is the alignment loss, $T_j$ is a target association vector based on the association between the target and a proxy target, and $A_j$ is a feature association vector based on the association between a feature and the proxy.

In some embodiments, the determining of the alignment loss may include determining, by the processor, the alignment loss according to the following Equation 4:

Equation 4

$$\mathcal{L}_{align-PAS} = -\sum_{j=1}^{C} \frac{1}{C \cdot \hat{S}_j} T_j \log A_j$$

where, $\mathcal{L}_{align-PAS}$ is the alignment loss, $\hat{S}_j$ is the proportion of sample associated with the j-th proxy in the batch, $T_j$ is the target association vector based on the association between the target and the proxy target, and $A_j$ is the feature association vector based on the association between the feature and the proxy.

In some embodiments, the determining of the total loss may include

determining, by the one or more processors, the total loss according to the following Equation 5:

Equation 5

$$\mathcal{L}_{PRIME} = \mathcal{L}_{reg} + \lambda_p \mathcal{L}_{proxy} + \lambda_a \mathcal{L}_{align}$$

where, $\mathcal{L}_{PRIME}$ is the total loss, $\mathcal{L}_{reg}$ is the regression loss, $\mathcal{L}_{proxy}$ is the proxy loss, $\mathcal{L}_{align}$ is the alignment loss, and each of $\lambda_p > 0$ and $\lambda_a > 0$ is a trade-off parameter for the proxy loss and the alignment loss.

According to an embodiment, a data analysis device includes one or more processors and one or more memories storing instructions loaded the into one or more memories through the one or more processors to process data based on a regression model, wherein the instructions are configured to, when executed, cause the one or more processors to prepare/generate a regression model which includes an encoder and a predictor, wherein the regression model is trained using a proxy including data points having a predetermined distribution, receive input data, perform a task to be analyzed on the input data through the regression model, the proxy is defined according to the following Equation 1:

Equation 1

$$\mathcal{P} = \{(z_i^p, y_i^p)\}_{i=1}^{C}$$

where, $\mathcal{P}$ is the set of proxies, $z_i^p$ is the proxy, C is the number of proxies, and $y_i^p$ is a target of the proxy.

In some embodiments, the input data may include image data of a wafer obtained during a semiconductor manufacturing process, and the performing of the task may include predicting a defect probability of the wafer from the input data based on the regression model, and automatically classifying the wafer based on the predicted defect probability.

Other features and aspects will be apparent from the following detailed description, the drawings, and the claims.

BRIEF DESCRIPTION OF THE DRAWINGS

FIG. 1 is a diagram for describing a data analysis device according to an embodiment.
FIG. 2 is a drawing for describing a learning device according to an embodiment.
FIGS. 3 to 7 are drawings for describing implementation examples of the data analysis device and the learning device according to an embodiment.
FIG. 8 is a diagram for describing a data analysis method according to an embodiment.
FIG. 9 is a diagram for describing a learning method according to an embodiment.
FIG. 10 is a diagram for describing the data analysis device according to an embodiment.
FIG. 11 is a diagram for describing the learning method according to an embodiment.
FIG. 12 is a drawing for describing a computing device according to an embodiment.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third," or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

The equations presented herein may be realized as data stored in a storage medium accessible to a data analysis device 10 and a learning device 20, or may be realized in a remote computing device or a cloud environment. To implement the equations, the data analysis device 10 and the learning device 20 (e.g., one or more processors in the data analysis device 10 and the learning device 20) may load analogously configured code/instructions into memory directly from their storage devices, or may load them into memory from a remote computing device or a cloud environment provided via a network. The equations and other mathematical notations herein are convenient shorthand for equivalent textual description. The equations and mathematical notations herein may be used as a guide for configuring source code (or circuit designs) that can be readily compiled into executable instructions (or constructed as circuitry) that operate as described by the mathematical equations and notations.

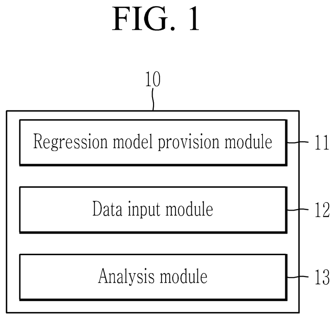

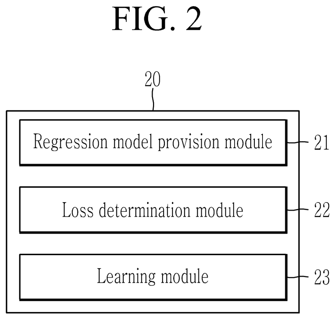

FIG. 1 illustrates a data analysis device according to one or more embodiments, and FIG. 2 illustrates a learning device according to one or more embodiments.

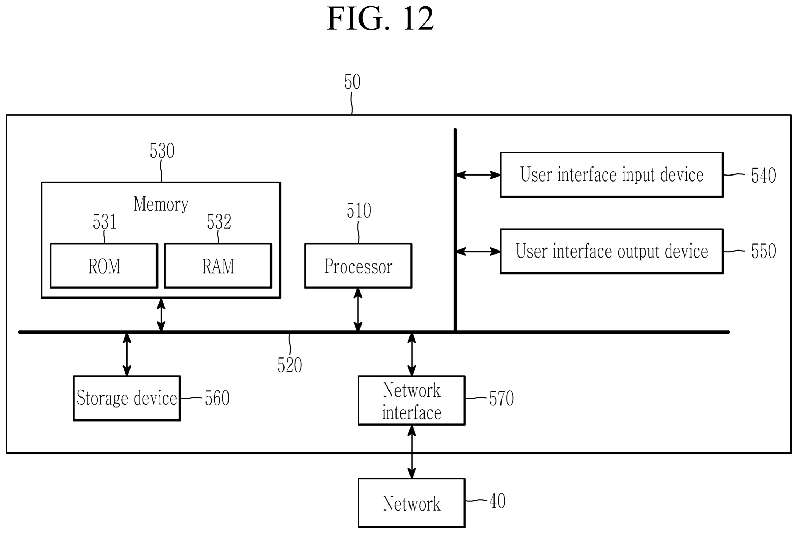

Referring to FIGS. 1 and 2, the data analysis device 10 and the learning device 20 according to one or more embodiments may each execute program code or instructions loaded into one or more memory devices through one or more processors. For example, the data analysis device 10 and the learning device 20 may each be implemented with a computing device 50 as described below with reference to FIG. 12. In this case, one or more processors may correspond to a processor 510 of the computing device 50, and one or more memory devices may correspond to a memory 530 of the computing device 50. The program code or instructions may be executed by one or more processors to perform data analysis and learning based on a regression model. As used herein, the term "module" logically separates and describes the functions performed by program code or instructions. For example, operations performed by a "module" may be understood as operations performed by one or more processors.

In FIGS. 1 and 2, the data analysis device 10 and the learning device 20 are shown separately, but this is only a logical distinction. The data analysis device 10 and the learning device 20 need not be implemented with separate hardware or separate software. That is, the data analysis device 10 and the learning device 20 may be implemented with different hardware or software, or, the data analysis device 10 and the learning device 20 may be implemented with the same hardware or software. At least a part of the data analysis device 10 and at least a part of the learning device 20 may be implemented with the same hardware or software, and the rest part of the data analysis device 10 and the rest part of the learning device 20 may be implemented with different hardware or software.

The data analysis device 10 may include a regression model provision module 11, a data input module 12, and an analysis module 13. The learning device 20 may include a regression model provision module 21, a loss determination module 22, and a learning module 23. As described above, the data analysis device 10 and the learning device 20 may be implemented to share at least some hardware and/or instructions/code, so the regression model provision module 11 and the regression model provision module 21 are not necessarily separate instances. Below, the description of the regression model provision module 11 may be equally applied to the regression model provision module 21 to the extent that no contradiction occurs.

The regression model provision module 11 may prepare or generate a regression model. The regression model may be a machine learning model that learns the relationship between features of input data and output values to predict continuous targets. In some embodiments, a generated regression model may include an encoder (ENC) and a predictor. The encoder may transform features of the input data into a low-dimensional or high-dimensional feature space, and the predictor may predict the final target based on the transformed features. Specifically, the encoder may extract patterns and information of input data to generate a feature vector, and the predictor may perform regression analysis using the feature vector and calculate a continuous target based thereon.

The regression model may be stored in a storage medium accessible to the data analysis device 10 and the learning device 20. Specifically, information such as weight of and/or structure of the regression model may be stored in the form of data in a storage device such as, for example, non-volatile memory. The data analysis device 10 may load the regression model from a storage device or may obtain the regression model from a remote computing device or a cloud environment via a network into memory to perform data analysis. Additionally, the learning device 20 may load the regression model, however obtained, into memory to perform learning and/or inference.

The regression model may be trained using a proxy. The proxy is a small amount of reference data designed to represent the full feature distribution of the data, and may be used to supplement the learning of the regression model in imbalanced data environments. The term "small" is a relative term, and specifically refers to the amount of proxy data relative to the overall amount of reference/training data. In particular, the proxy may improve the generalization performance of the regression model during the learning process by ensuring that the input data is well-ordered in a specific feature space while maintaining a balanced representation of the target. This ensures that the regression model is not biased towards multiple classes and may perform accurate predictions even in areas of little data.

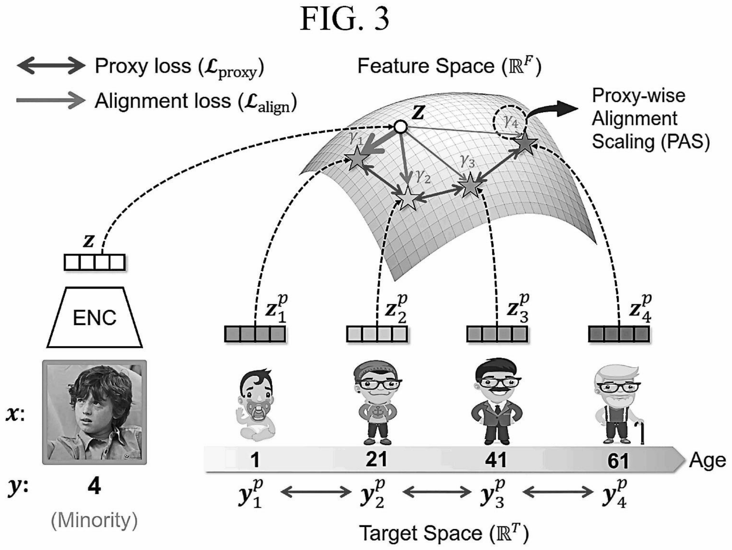

More specifically, the proxy may include data points having a distribution trait. The distribution trait may be that the data of the proxy is balanced and has a well-ordered feature distribution. Among these, the balanced distribution may be a target distribution with some measure of uniformity. On the other hand, with regard to the well-ordered feature distribution, for example, the regression model may predict target y for input x. Letting z represent a feature generated by the encoder, the encoder of the regression model f may be defined as f: $X \rightarrow Z$, and the predictor g of the regression model may be defined as g: $Z \rightarrow Y$, where X represents a set of inputs x, Y represents a set of targets y, and Z represents a feature space (e.g., $\mathbb{R}^F$ in FIG. 3). In this case, a feature z may be defined to be well-ordered when it satisfies the following conditions.

Conditions

For all i, j, k, if $d_t(y_i, y_j) \leq d_t(y_i, y_k)$, then $d_f(z_i, z_j) \leq d_f(z_i, z_t)$.

In the Conditions, $d_t(\cdot, \cdot)$ is a distance metric defined with respect to Y, and $d_f(\cdot, \cdot)$ is a distance metric defined with respect to Z. Based on the above Conditions, the encoder may be trained to encode the well-ordered feature. Based on this, the well-ordered feature distribution may be implemented, and in the well-ordered feature distribution, it can be guaranteed that samples that are close to each other in Y are mapped to be close to each other in Z as well.

In some embodiments, the proxy may be defined according to Equation 1:

Equation 1

$$\mathcal{P} = \{(z_i^p, y_i^p)\}_{i=1}^C$$

In Equation 1, $\mathcal{P}$ is the set of proxies, $z_i^p$ is the proxy, C is the number of proxies (wherein C is an integer greater than 1), and $y_i^p$ is a target of the proxy. That is, $z_i^p$ is a feature point, $y_i^p$ is a target corresponding thereto, and $\mathcal{P}$ represents the corresponding well-ordered feature distribution.

The regression model provision module 21 of the learning device 20 may load the regression model from a storage device or from a remote computing device or cloud environment via a network into memory.

The learning module 23 may train the regression model. Specifically, the learning module 23 may randomly initialize $\{z_i^p\}_{i=1}^C$ corresponding to $\{y_i^p\}_{i=1}^C$ after determining $\{y_i^p\}_{i=1}^C$. Additionally, the learning module 23 may train $\{z_i^p\}_{i=1}^C$ together with a model parameter. Here, $\{y_i^p\}_{i=1}^C$ may be determined to be sufficiently uniformly distributed in the target set.

In some embodiments, for a scalar target, $\{y_i^p\}_{i=1}^C$ may be determined as C quantiles of a target range [$y_{min}$, $y_{max}$] defined by a minimum value $y_{min}$ and a maximum $y_{max}$ values of the target in a training dataset S. Here, the C number of quantiles is a reference value that divides the section into (C-1) sections so that the sections have equal probability density between them. Accordingly, each quantile may be used as a representative target of the proxy, which allows for C proxies to be set that evenly reflect the entire range of targets.

On the other hand, in some embodiments, for a multi-dimensional target, $\{y_i^p\}_{i=1}^C$ may be determined as a cluster center to which K-means clustering is applied. The cluster center obtained by the K-means clustering may be a representative point that indicates the average location (or centroid) of data within each cluster after grouping the given data points into K clusters. In other words, the cluster centers comprehensively reflect the characteristics of the respective clusters of data and may be used as data points that effectively represent the target distribution when setting a proxy.

The loss determination module 22 may determine a loss for training the regression model. Here, the loss or total loss for training the regression model may be determined, for example, using multiple different losses, and the learning module 23 may train the regression model to minimize the total loss.

The loss determination module 22 may determine the proxy loss. The proxy loss may be used to ensure that $\{z_i^p\}_{i=1}^C$ is well-ordered according to $\{y_i^p\}_{i=1}^C$.

In some embodiments, the loss determination module 22 may determine the proxy loss according to the following Equation 2:

Equation 2

$$\mathcal{L}_{proxy} = \sum_{i \neq j} \{p_{ij} \log \frac{p_{ij}}{q_{ij}} - w_{ij}(1 - cos\theta_{z_i^p, z_j^p})^2\}$$

In Equation 2, is the proxy loss, $p_{ij}$ is a probability distribution representing the similarity between the targets of the proxies, $q_{ij}$ is a probability distribution representing the similarity between the proxies, $w_{ij} = \alpha \times d_t\left(y_i^p, y_j^p\right), \alpha > 0, \theta$ is an angle between the proxies $z_i^p$ and $z_j^p$, and $d_t\left(y_i^p, y_j^p\right)$ is the distance between $y_i^p$ and $y_j^p$. Here, the first term may ensure that the proxy is well-ordered, and the second term may increase feature space uniformity. Since $\{y_i^p\}_{i=1}^C$, balances the target distribution and since $\{z_i^p\}_{i=1}^C$ is well-ordered, the set P of proxies may be used as explicit anchors that provide informative associations in the process of representation learning.

With respect to the proxy loss determined by Equation 2, the learning module 23 may define two probability distributions P and Q representing the pairwise similarity of $\{y_i^p\}_{i=1}^C$ , and $\{z_i^p\}_{i=1}^C$ and align these probability distributions to optimize $\{z_i^p\}_{i=1}^C$ . Here, the probability distribution P represents the pairwise similarity between $\{y_i^p\}_{i=1}^C$ , and the probability distribution Q represents the pairwise similarity between $\{z_i^p\}_{i=1}^C$ . The learning module 23 may, for example, minimize the Kullback-Leibler (KL) divergence between probability distributions P and Q so that $\{z_i^p\}_{i=1}^C$ is arranged to reflect the similarity order of $\{y_i^p\}_{i=1}^C$ .

The loss determination module 22 may determine the alignment loss. The alignment loss, which serves to align sample features with the proxies, may be used to move z closer to a proxy having similar targets and further away from a proxy with a different target.

In some embodiments, the loss determination module 22 may determine the alignment loss according to the following Equation 3:

Equation 3

$$\mathcal{L}_{align} = -\sum_{j=1}^{C} T_j \log A_j$$

In Equation 3, $\mathcal{L}_{align}$ is the alignment loss, $T_j$ is a target association vector based on the association between the target y and a proxy target (e.g., a target of a proxy, or a target corresponding to a proxy) $y_i^p$ , and $A_j$ is a feature association vector based on the association between the feature z and the proxy $z_i^p$ .

The loss determination module 22 may determine the total loss based on the proxy loss and the alignment loss determined as above. Specifically, the loss determination module 22 may determine the total loss based on the predetermined regression loss, the proxy loss, and the alignment loss according to the corresponding task, and the learning module 23 may train the regression model based on the determined total loss.

On the other hand, in some embodiments, the loss determination module 22 may determine the alignment loss according to the following Equation 4:

Equation 4

$$\mathcal{L}_{align-PAS} = -\sum_{j=1}^{C} \frac{1}{C \cdot \widehat{S}_j} T_j \log A_j$$

In Equation 4, $\mathcal{L}_{align-PAS}$ is the alignment loss (wherein PAS represents Proxy-wise Alignment Scaling (e.g., $\gamma_1$ to $\gamma_4$)), $\widehat{S}_j$ is the proportion of sample associated with the j-th proxy in the batch, $T_j$ is the target association vector based on the association between the target y and the proxy target $y_i^p$ , and $A_j$ is the feature association vector based on the association between the feature z and the proxy $z_i^p$ .

In some embodiments, the loss determination module 22 may determine the total loss according to the following Equation 5:

Equation 5

$$\mathcal{L}_{PRIME} = \mathcal{L}_{reg} + \lambda_p \mathcal{L}_{proxy} + \lambda_a \mathcal{L}_{align}$$

In Equation 5, $\mathcal{L}_{PRIME}$ is the total loss, $\mathcal{L}_{reg}$ is the regression loss, $\mathcal{L}_{proxy}$ is the proxy loss (e.g., the proxy loss according to Equation 2), $\mathcal{L}_{align}$ is the alignment loss (e.g., the alignment loss according to Equation 3 or the alignment loss according to Equation 4), and $\lambda_p$ $(\lambda_p > 0)$ and $\lambda_a$ $(\lambda_a > 0)$ may are each a trade-off parameter for the proxy loss and the alignment loss.

The data input module 12 of the data analysis device 10 may receive input data, and the analysis module 13 may perform a task to be analyzed on the input data through the regression model that has been trained as described above.

In some embodiments, it is possible to effectively solve the problem of existing regression models being biased toward multiple data by introducing a proxy to evenly reflect feature distribution in imbalanced data.

FIGS. 3 to 7 illustrate implementation examples of the data analysis device and the learning device according to one or more embodiments.

Referring to FIG. 3, $\{y_i^p\}_{i=1}^4$ may be determined to be evenly distributed in the target set (e.g., the target space $\mathbb{R}^T$), $\{z_i^p\}_{i=1}^4$ may be determined to be well-ordered, the proxy loss $\mathcal{L}_{proxy}$ may be used to ensure that $\{z_i^p\}_{i=1}^C$ is well-ordered according to $\{y_i^p\}_{i=1}^C$, and the alignment loss $\mathcal{L}_{align}$ may be used to align the sample feature (e.g., the sample feature in the feature space Z) with the proxy.

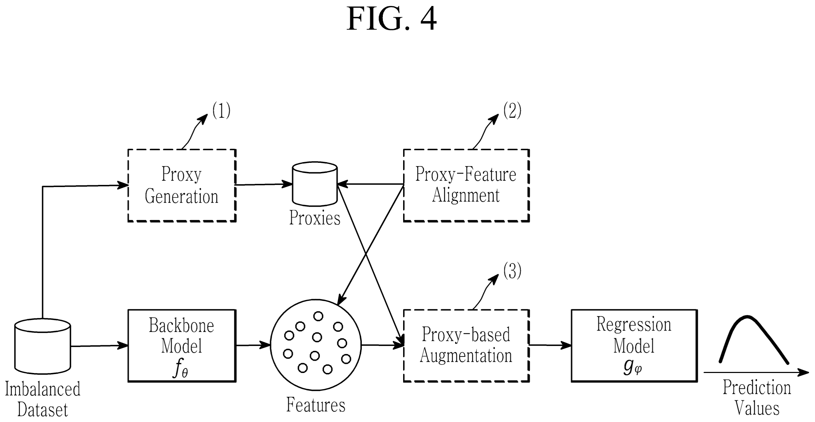

Referring to FIG. 4, a proxy may be generated. The proxy is a small-scale dataset that fairly represents the entire feature distribution in a larger imbalanced dataset, may be generated (see (1) the proxy generation of FIG. 4). The proxy may be set to alleviate the imbalance problem of existing data while maintaining a balanced representation of the target. The generated proxy is used in the learning process to provide alignment with the sample features, and may serve to induce a balanced feature representation so that the resulting model (e.g., the regression model $g_\varphi$ in FIG. 4) is not biased towards a specific target. In particular, the sample features may be optimized to align closely to proxies with similar targets and away from proxies having different targets (see the proxy-feature alignment (2) in FIG. 4). In addition, data augmentation is possible by utilizing the learned proxy to utilize the relationship between existing samples (or features (or sample features) in FIG. 4) and proxies (thus allowing the dataset to be augmented in a balanced manner), and a regression model with excellent generalization performance may be provided even in an imbalanced data environment (e.g., when the dataset is imbalanced). In an embodiment, the existing samples may be generated by preprocessing an unbalanced data set via a backbone model $f_\theta$.

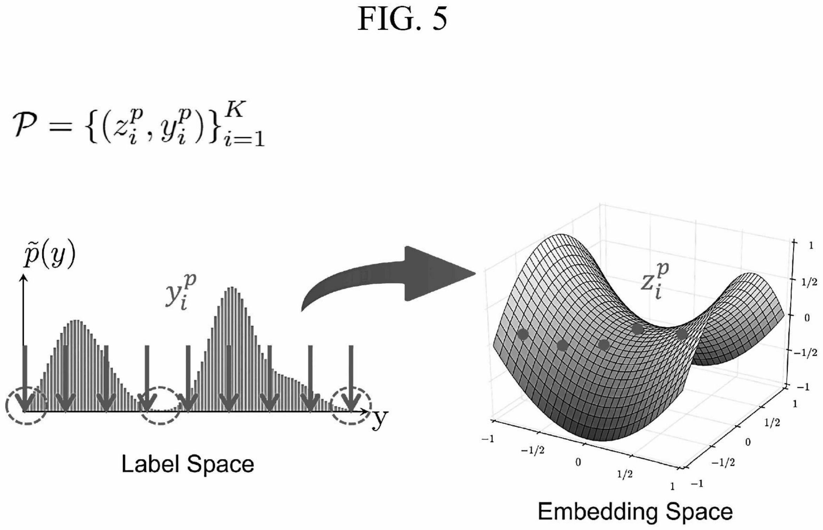

Referring to FIG. 5, a proxy $z_i^p$ may have the same number of dimensions as the feature of the input data, and a target $y_i^p$ of a proxy may have the same number of dimensions as the actual target or label. To solve the data imbalance problem, uniform sampling may be performed in a label space, and an embedding proxy $z_i^p$ of the proxy set (e.g., the set of the proxy) based on the uniformly sampled labels may be well-distributed in an embedding space. In FIG. 5, $\tilde{P}(y)$ may represent a function that determines a target of a proxy based on a target y.

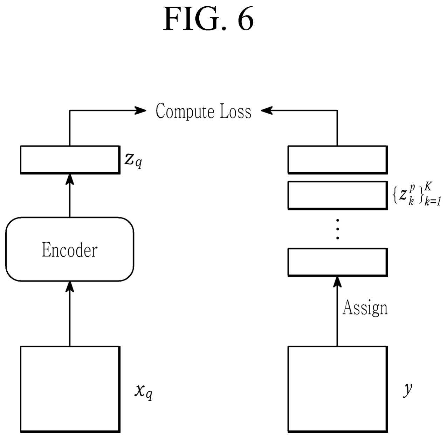

Referring to FIG. 6, whereas prior learning has traditionally been based on relationships between samples, in some embodiments this may be supplanted by learning between proxies and samples. For example, in FIG. 6, a sample $z_q$ may be generated by processing an input $x_q$ via an encoder, and a proxy $\{z_i^p\}_{i=1}^C$ may be generated by allocating a target y. In addition, a loss may be calculated based on the proxy $\{z_i^p\}_{i=1}^C$ and the sample $z_q$.

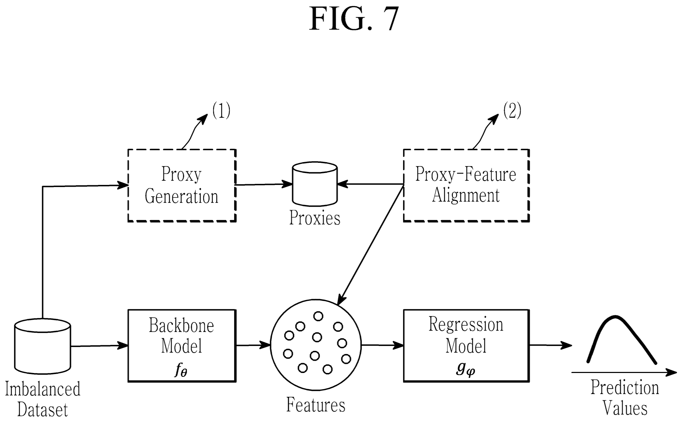

Referring to FIG. 7, in another embodiment, the proxy-based augmentation (3) shown in FIG. 4 is not essential, and the generated proxy may be utilized only for feature learning.

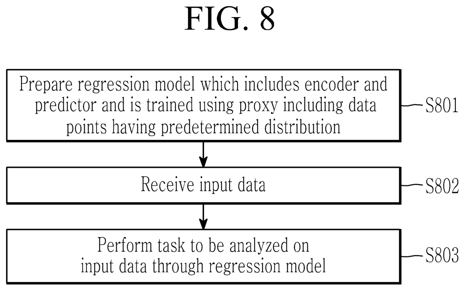

FIG. 8 illustrates a data analysis method according to one or more embodiments.

Referring to FIG. 8, a data analysis method according to one or more embodiments may include a step (S801) of preparing/generating a regression model which includes an encoder and a predictor and is trained using a proxy including data points having a predetermined distribution, a step (S802) of receiving input data, and a step (S803) of performing a task to be analyzed on the input data through the regression model.

For more detailed information on the data analysis method, reference can be made to the description of the embodiments described herein.

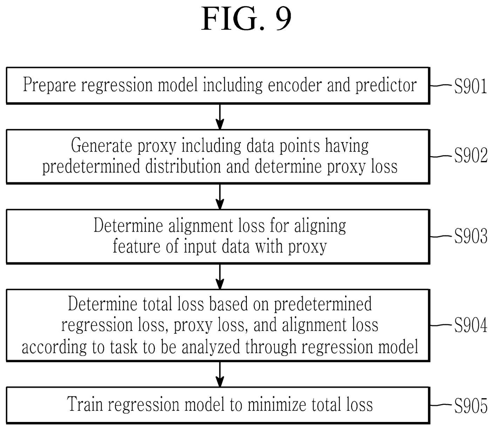

FIG. 9 illustrates a learning method according to one or more embodiments.

Referring to FIG. 9, a learning method according to one or more embodiments may include a step (S901) of preparing the regression model including an encoder and a predictor, a step (S902) of generating a proxy including data points having a predetermined distribution and determining a proxy loss, a step (S903) of determining an alignment loss for aligning a feature of input data with the proxy, a step (S904) of determining a total loss based on at least two of a predetermined regression loss, the proxy loss, and the alignment loss according to the task to be analyzed through the regression model, and a step (S905) of training the regression model to minimize the total loss.

For more detailed information on the learning method, reference can be made to the description of the embodiments described herein.

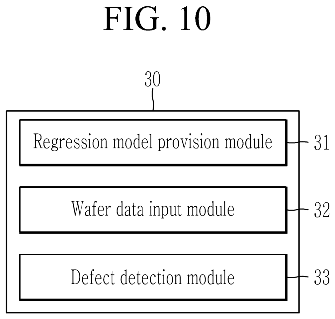

FIG. 10 is a diagram for describing the data analysis device according to one or more embodiments.

Referring to FIG. 10, a data analysis device 30 according to one or more embodiments may execute program code or instructions loaded into one or more memory devices through one or more processors. For example, the data analysis device 30 may be implemented with the computing device 50 as described below with reference to FIG. 12. In this case, one or more processors may correspond to a processor 510 of the computing device 50, and one or more memory devices may correspond to a memory 530 of the computing device 50. The program code or instructions may be executed by one or more processors to perform data analysis and learning based on the regression model.

The data analysis device 30 may include a regression model provision module 31, a wafer data input module 32, and a defect detection module 33.

The regression model provision module 31 may prepare/generate a regression model. The regression model may include an encoder and a predictor, and may be trained based on semiconductor manufacturing process data. In particular, the regression model may be trained using a proxy, as described herein. The wafer data input module 32 may receive input data including image data of a wafer obtained in a semiconductor manufacturing process, and the defect detection module 33 may predict a defect probability of a wafer from the input data based on the regression model that has been trained, and may automatically classify the wafer (e.g., as spec-in or spec-out) based on the predicted defect probability.

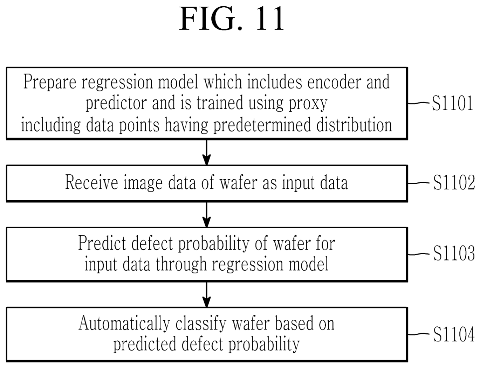

FIG. 11 illustrates the data analysis method according to one or more embodiments.

Referring to FIG. 11, the data analysis method according to one or more embodiments may include a step (S1101) of preparing a regression model which includes an encoder and a predictor, and is trained using a proxy including data points having a predetermined distribution, a step (S1102) of receiving image data of a wafer as input data, a step (S1103) of predicting the defect probability of the wafer for the input data through the regression model, and a step (S1104) of automatically classifying the wafer based on the predicted defect probability.

For more detailed information about the above data analysis method, reference can be made to the description of the embodiments described herein.

FIG. 12 illustrates a computing device according to one or more embodiments.

Referring to FIG. 12, the data analysis method, the data analysis device, the learning method, and a learning device based on a regression model according to embodiments may be implemented using the computing device 50 or variations thereof. The computing device 50 may be implemented as various types of electronic devices, servers, or similar devices, and its functions may be implemented through a combination of software and hardware.

The computing device 50 may include the processor 510, a memory 530, a user interface input device 540, a user interface output device 550, and a storage device 560 communicating through a bus 520. The computing device 50 may also include a network interface 570 electrically connected to a network 40. The network interface 570 may transmit or receive signals to or from other entities through the network 40. The computing device 50 may have more or fewer components.

The processor 510 may be implemented as various one or more types of calculation devices, such as a microcontroller unit (MCU), an application processor (AP), a central processing unit (CPU), a graphic processing unit (GPU), a neural processing unit (NPU), a quantum processing unit (QPU), combinations thereof, etc., as non-limiting examples. The processor 510 is a semiconductor device that executes instructions stored in the memory 530 or the storage device 560 and may play a key role in the system. Program code and data stored in the memory 530 or the storage device 560 instruct the processor 510 to perform specific tasks, thereby enabling the overall operation of the system. The processor 510 may be configured to implement various functions and methods described above with respect to FIGS. 1 to 11.

The memory 530 and storage device 560 may include various forms of volatile or non-volatile storage media for storing and accessing data of the system. For example, the memory 530 may include a read-only memory (ROM) 531 and a random access memory (RAM) 532. In some embodiments, the memory 530 may be built into the processor 510, in which case data transmission speeds between the memory 530 and the processor 510 may be very fast. In some other embodiments, the memory 530 may be disposed external to the processor 510, in which case the memory 530 may be connected to the processor 510 through various data buses or interfaces. This connection may be made through a variety of known means-for example, a peripheral component interconnect express (PCIe) interface for high-speed data transmission or a memory controller.

In some embodiments, at least some of the components or functions of the data analysis method, the data analysis device, the learning method, and the learning device based on the regression model according to the embodiments may be implemented as a program or software (e.g., instructions) executed on the computing device 50, and the program or software may be stored on a computer-readable recording medium or storage medium. Specifically, according to one or more embodiments, a computer-readable recording medium or storage media may record a program for executing steps included in an implementation of the data analysis method, the data analysis device, the learning method, and the learning device based on the regression model according to the embodiments, on a computer including the processor 510 executing a program or instructions stored in the memory 530 or the storage device 560.

In some embodiments, at least some of the components or functions of the data analysis method, the data analysis device, the learning method, and the learning device based on the regression model according to the embodiments may be implemented using hardware or a circuit of the computing device 50, or may be implemented as separate hardware or a circuit that may be electrically connected to the computing device 50.

According to embodiments, it is possible to effectively solve the problem of existing regression models being biased toward multiple data by introducing a proxy to evenly reflect feature distribution in imbalanced data. Proxies provide small reference points that represent the full set of features of the data and allow the model to be trained based on them, which may enhance the learning effect of a small number of data with extreme targets. Additionally, by optimizing the alignment between the proxy and the input data, the model may improve generalization performance on imbalanced data while maintaining the continuous relationship of the targets. Further, it is possible to enable stable and reliable predictions even in imbalanced data environments.

The computing apparatuses, the electronic devices, the processors, the memories, the information output system and hardware, the storage devices, and other apparatuses, devices, units, modules, and components described herein, including descriptions with respect to respect to FIGS. 1-12, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. In addition, processors(s) and controller(s), as a non-limiting example, do not mean human processing or human control, but rather, refer to hardware components as described herein, as non-limiting examples.

The methods illustrated in, and discussed with respect to, FIGS. 1-12 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

**Claims**

1. A data analysis method for defect detection during a semiconductor manufacturing process , performed by a computing device including one or more processors and a memory, comprising:

   providing, by the one or more processors, a trained regression model, wherein the regression model comprising an encoder and a predictor, and wherein the regression model has been trained using a proxy including data points having a predetermined distribution;
   receiving, by the one or more processors, input data; and
   performing, by the one or more processors, an inference to carry out a task on the input data to be analyzed through the regression model, the inference performed by the regression model based on the input data.

2. The data analysis method of claim 1, wherein
   the input data comprises image data of a wafer obtained during the semiconductor manufacturing process, and the performing of the task comprises:

   predicting, by the one or more processors, a defect probability of the wafer from the input data based on the regression model; and
   automatically, by the one or more processors, classifying the wafer based on the predicted defect probability.

3. The data analysis method of claim 1 or 2, wherein

   the proxy is defined according to $\mathcal{P} = \{(z_i^p, y_i^p)\}_{i=1}^C$

   where, $\mathcal{P}$ is the set of proxies, $z_i^p$ is the proxy, C is the number of proxies, and $y_i^p$ is a target of the proxy.

4. The data analysis method of claim 3, further comprising training, by the one or more processors, the regression model, and
   wherein the training of the regression model comprises:

   randomly initializing, by the one or more processors, $\{z_i^p\}_{i=1}^C$ corresponding to $\{y_i^p\}_{i=1}^C$ after determining $\{y_i^p\}_{i=1}^C$ ; and

   training, by the one or more processors, $\{z_i^p\}_{i=1}^C$ together with a model parameter.

5. The data analysis method of claim 3 or 4, wherein the training of the regression model comprises
   training, by the one or more processors, the regression model based on a total loss determined based on a predetermined regression loss, a proxy loss, and an alignment loss according to the task.

6. The data analysis method of claim 5, wherein the training of the regression model further comprises

   determining, by the processor, the proxy loss according to

   $$\mathcal{L}_{proxy} = \sum_{i \neq j} \{ p_{ij} \log \frac{p_{ij}}{q_{ij}} - w_{ij}(1 - cos\theta_{z_i^p, z_j^p})^2 \} \}$$

   where, $\mathcal{L}_{proxy}$ is the proxy loss, $p_{ij}$ is a probability distribution representing the similarity between the targets of

the proxies, $q_{ij}$ is a probability distribution representing the similarity between the proxies,

$w_{ij} = \alpha \times d_t\left(y_i^p, y_j^p\right)$, $\alpha > 0$, and $d_t\left(y_i^p, y_j^p\right)$ is the distance between $y_i^p$ and $y_j^p$.

7. The data analysis method of claim 5 or 6, wherein the training of the regression model further comprises

   determining, by the processor, the alignment loss according to $\mathcal{L}_{align} = -\sum_{j=1}^{C} T_j \log A_j$

   where, $\mathcal{L}_{align}$ is the alignment loss, $T_j$ is a target association vector based on the association between the target and a proxy target, and $A_j$ is a feature association vector based on the association between a feature and the proxy.

8. The data analysis method of any of the claims 5-7, wherein the training of the regression model further comprises

   determining, by the processor, the alignment loss according to

$$\mathcal{L}_{align-PAS} = -\sum_{j=1}^{C} \frac{1}{C \cdot \widehat{S_j}} T_j \log A_j$$

   where, $\mathcal{L}_{align-PAS}$ is the alignment loss, $\widehat{S_j}$ is the proportion of sample associated with the j-th proxy in the batch, $T_j$ is the target association vector based on the association between the target and the proxy target, and $A_j$ is the feature association vector based on the association between the feature and the proxy.

9. The data analysis method of any of the claims 5-8, wherein the training of the regression model further comprises

   determining, by the processor, the total loss according to $\mathcal{L}_{PRIME} = \mathcal{L}_{reg} + \lambda_p \mathcal{L}_{proxy} + \lambda_a \mathcal{L}_{align}$

   wherein, $\mathcal{L}_{PRIME}$ is the total loss, $\mathcal{L}_{reg}$ is the regression loss, $\mathcal{L}_{proxy}$ is the proxy loss, $\mathcal{L}_{align}$ is the alignment loss, and each of $\lambda_p > 0$ and $\lambda_a > 0$ is a trade-off parameter for the proxy loss and the alignment loss.

10. A learning method of a regression model, performed by a computing device including one or more processors and a memory, the method comprising:

    generating, by the one or more processors, the regression model, the regression model comprising an encoder and a predictor;
    generating, by the one or more processors, a proxy including data points having a predetermined distribution and determining a proxy loss based on the proxy;
    determining, by the one or more processors, an alignment loss for aligning a feature of input data with the proxy;
    determining, by the one or more processors, a total loss based on at least two of the predetermined regression loss, the proxy loss, and the alignment loss, wherein the total loss is determined according to the task to be analyzed through the regression model; and
    training, by the processor, the regression model to minimize the total loss.

11. The learning method of claim 10, wherein

    the proxy is defined according to $\mathcal{P} = \{(z_i^p, y_i^p)\}_{i=1}^{C}$

    where, $\mathcal{P}$ is the set of proxies, $z_i^p$ is the proxy, C is the number of proxies, and $y_i^p$ is a target of the proxy.

12. The learning method of claim 10 or 11, wherein the training of the regression model comprises

    randomly initializing, by the one or more processors, $\{z_i^p\}_{i=1}^{C}$ corresponding to $\{y_i^p\}_{i=1}^{C}$ after determining

$\{y_i^p\}_{i=1}^C$ ; and

training, by the one or more processors, $\{z_i^p\}_{i=1}^C$ together with a model parameter,

13. The learning method of claim 12, wherein the initializing comprises

determining, by the one or more processors, $\{y_i^p\}_{i=1}^C$ as C+1 quantiles of a target range determined by a minimum value and a maximum value of a target in a training dataset,
and/or wherein the initializing comprises

determining, by the one or more processors, $\{y_i^p\}_{i=1}^C$ as a cluster center to which K-means clustering is applied.

14. The learning method of claim 11 or 12, wherein

the determining of the proxy loss comprises
determining, by the one or more processors, the proxy loss according

$$\mathcal{L}_{proxy} = \sum_{i \neq j}\{p_{ij} \log\frac{p_{ij}}{q_{ij}} - w_{ij}(1 - cos\theta_{z_i^p, z_j^p})^2\}$$

where, $\mathcal{L}_{proxy}$ is the proxy loss, $p_{ij}$ is a probability distribution representing the similarity between the targets of the proxies, $q_{ij}$ is a probability distribution representing the similarity between the proxies,

$w_{ij} = \alpha \times d_t\left(y_i^p, y_j^p\right)$ , $\alpha > 0$, and $d_t\left(y_i^p, y_j^p\right)$ is the distance between $y_i^p$ and $y_j^p$ ,

and/or wherein the determining of the alignment loss comprises

determining, by the processor, the alignment loss according to $\mathcal{L}_{align} = -\sum_{j=1}^C T_j \log A_j$

where, $\mathcal{L}_{align}$ is the alignment loss, $T_j$ is a target association vector based on the association between the target and a proxy target, and $A_j$ is a feature association vector based on the association between a feature and the proxy,
and/or wherein the determining of the alignment loss comprises

determining, by the processor, the alignment loss according to $\mathcal{L}_{align-PAS} = -\sum_{j=1}^C \frac{1}{C \cdot \hat{s}_j} T_j \log A_j$

where, $\mathcal{L}_{align-PAS}$ is the alignment loss, $\hat{s}_j$ is the proportion of sample associated with the j-th proxy in the batch, $T_j$ is the target association vector based on the association between the target and the proxy target, and $A_j$ is the feature association vector based on the association between the feature and the proxy,
and/or wherein the determining of the total loss comprises

determining, by the one or more processors, the total loss according to $\mathcal{L}_{PRIME} = \mathcal{L}_{reg} + \lambda_p \mathcal{L}_{proxy} + \lambda_a \mathcal{L}_{align}$

where, $\mathcal{L}_{PRIME}$ is the total loss, $\mathcal{L}_{reg}$ is the regression loss, $\mathcal{L}_{proxy}$ is the proxy loss, $\mathcal{L}_{align}$ is the alignment loss, and each of $\lambda_p > 0$ and $\lambda_a > 0$ is a trade-off parameter for the proxy loss and the alignment loss.

15. A data analysis device, comprising:

one or more processors; and
one or more memories
storing instructions or code loaded into the one or more memories through the one or more processors to process data based on a regression model,
wherein the instructions are configured to, when executed, cause the one or more processors to execute the method of any of the claims 1-9.

# FIG. 1

10

| |
|---|
| Regression model provision module — 11 |
| Data input module — 12 |
| Analysis module — 13 |

# FIG. 2

20

| |
|---|
| Regression model provision module — 21 |
| Loss determination module — 22 |
| Learning module — 23 |

FIG. 3

Proxy loss ($\mathcal{L}_{\text{proxy}}$)

Alignment loss ($\mathcal{L}_{\text{align}}$)

Feature Space ($\mathbb{R}^F$)

Proxy-wise Alignment Scaling (PAS)

$\boldsymbol{z}$

$\gamma_1$ $\gamma_2$ $\gamma_3$ $\gamma_4$

$\boldsymbol{z}$

ENC

$\boldsymbol{z}_1^p$ $\boldsymbol{z}_2^p$ $\boldsymbol{z}_3^p$ $\boldsymbol{z}_4^p$

$\boldsymbol{x}$:

$\boldsymbol{y}$:

4

(Minority)

1    21    41    61    Age

$\boldsymbol{y}_1^p \longleftrightarrow \boldsymbol{y}_2^p \longleftrightarrow \boldsymbol{y}_3^p \longleftrightarrow \boldsymbol{y}_4^p$

Target Space ($\mathbb{R}^T$)

# FIG. 4

FIG. 5

$$\mathcal{P} = \{(z_i^p, y_i^p)\}_{i=1}^{K}$$

$\tilde{p}(y)$

$y_i^p$

Label Space

$z_i^p$

Embedding Space

EP 4 783 077 A1

# FIG. 6

Compute Loss

$z_q$

Encoder

$\{z_k^p\}_{k=1}^K$

Assign

$x_q$

$y$

# FIG. 7

# FIG. 8

| Prepare regression model which includes encoder and predictor and is trained using proxy including data points having predetermined distribution | —S801 |

| Receive input data | —S802 |

| Perform task to be analyzed on input data through regression model | —S803 |

# FIG. 9

Prepare regression model including encoder and predictor —S901

Generate proxy including data points having predetermined distribution and determine proxy loss —S902

Determine alignment loss for aligning feature of input data with proxy —S903

Determine total loss based on predetermined regression loss, proxy loss, and alignment loss according to task to be analyzed through regression model —S904

Train regression model to minimize total loss —S905

# FIG. 10

30

| |
|---|
| Regression model provision module — 31 |
| Wafer data input module — 32 |
| Defect detection module — 33 |

# FIG. 11

| Prepare regression model which includes encoder and predictor and is trained using proxy including data points having predetermined distribution |
|---|

S1101

| Receive image data of wafer as input data |
|---|

S1102

| Predict defect probability of wafer for input data through regression model |
|---|

S1103

| Automatically classify wafer based on predicted defect probability |
|---|

S1104

# FIG. 12

EP 4 783 077 A1

Europäisches
Patentamt

European
Patent Office

Office européen
des brevets

## EUROPEAN SEARCH REPORT

**Application Number**

EP 26 15 3384

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/153062 A1 (MAJUMDAR AMITAVA [US] ET AL) 9 May 2024 (2024-05-09)<br>* abstract *<br>* paragraph [0002] - paragraph [0010] *<br>* paragraph [0024] - paragraph [0086]; figures 1-9 * | 1-5,7, 9-15 | INV.<br>G06N20/00<br>G06T7/00 |
| X | HESSE LINDE S. ET AL: "INSightR-Net: Interpretable Neural Network for Regression Using Similarity-Based Comparisons to Prototypical Examples", 16 September 2022 (2022-09-16), MEDICAL IMAGE COMPUTING AND COMPUTER ASSISTED INTERVENTION - MICCAI 2022; [LECTURE NOTES IN COMPUTER SCIENCE; LECT.NOTES COMPUTER] SPRINGER INTERNATIONAL PUBLISHING, CHAM, PAGE(S) 502 - 511, XP047633354, ISSN: 0302-9743 ISBN: 978-3-031-16436-1 [retrieved on 2022-09-16]<br>* abstract *<br>* chapters 1-5;<br>page 502 - page 510; figures 1-3 * | 1-5,7, 9-15 | |
| A | YU GONG ET AL: "RankSim: Ranking Similarity Regularization for Deep Imbalanced Regression", ARXIV.ORG CORNELL UNIVERSITY LIBRARY, 201 OLIN LIBRARY CORNELL UNIVERSITY ITHACA, NY 14853, 24 June 2022 (2022-06-24), XP091251450,<br>* abstract *<br>* chapters 1-5;<br>page 1 - page 9; figures 1-5 * | 1-15 | TECHNICAL FIELDS SEARCHED (IPC)<br><br>G06N<br>G06T |

-/--

The present search report has been drawn up for all claims

| Place of search | Date of completion of the search | Examiner |
|---|---|---|
| The Hague | 2 June 2026 | Hasnas, Sergiu |

EPO FORM 1503 03.82 (P04C01)

Europäisches
Patentamt

European
Patent Office

Office européen
des brevets

**EUROPEAN SEARCH REPORT**

**Application Number**

EP 26 15 3384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BENOIT DUFUMIER ET AL: "Conditional Alignment and Uniformity for Contrastive Learning with Continuous Proxy Labels", ARXIV.ORG CORNELL UNIVERSITY LIBRARY, 201 OLIN LIBRARY CORNELL UNIVERSITY ITHACA, NY 14853, 10 November 2021 (2021-11-10), XP091095887, * abstract * * chapters 1-4; page 1 - page 3; figures 1-3 *<br>----- | 1-15 | |
| A | CUI YIN ET AL: "Class-Balanced Loss Based on Effective Number of Samples", 2019 IEEE/CVF CONFERENCE ON COMPUTER VISION AND PATTERN RECOGNITION (CVPR) IEEE, 15 June 2019 (2019-06-15), pages 9260-9269, XP033686891, DOI: 10.1109/CVPR.2019.00949 [retrieved on 2020-01-08] * abstract * * chapters 1-6; page 9260 - page 9267; figures 1-7 *<br>----- | 8 | |

TECHNICAL FIELDS SEARCHED (IPC)

The present search report has been drawn up for all claims

| Place of search | Date of completion of the search | Examiner |
|---|---|---|
| The Hague | 2 June 2026 | Hasnas, Sergiu |

EPO FORM 1503 03.82 (P04C01)

page 2 of 2

## ANNEX TO THE EUROPEAN SEARCH REPORT
## ON EUROPEAN PATENT APPLICATION NO.

EP 26 15 3384

02-06-2026

| Patent document cited in search report | Publication date | Patent family member(s) | | Publication date |
|---|---|---|---|---|
| US 2024153062 A1 | 09-05-2024 | CN | 112534246 A | 19-03-2021 |
| | | EP | 3833966 A1 | 16-06-2021 |
| | | JP | 7322136 B2 | 07-08-2023 |
| | | JP | 2021533570 A | 02-12-2021 |
| | | KR | 20210025701 A | 09-03-2021 |
| | | US | 2020051235 A1 | 13-02-2020 |
| | | US | 2021090246 A1 | 25-03-2021 |
| | | US | 2024153062 A1 | 09-05-2024 |
| | | WO | 2020033107 A1 | 13-02-2020 |

EPO FORM P0459